# EUROPEAN PATENT SPECIFICATION

(11) **EP 1 470 759 B1**
(45) Date of publication and mention of the grant of the patent: **21.02.2007**
(21) Application number: 03076198.5
(22) Date of filing: 24.04.2003
(51) Int. Cl.: A23P 1/08, A23L 1/10

(54) **Snack food and method for preparation thereof**
Snackprodukt und seine Herstellmethode
Produit snack et procédé pour son fabrication

(43) Date of publication of application: 27.10.2004
(73) Proprietor: Frito-Lay Trading Company (Europe) GmbH, 3011 Bern (CH)
(72) Inventor: Broek, Arnold Peter, 1628 SM Hoorn (NL); Kreuning, Johannes, 1212 BC Hilversum (NL)
(74) Representative: Prins, Adrianus Willem

(56) References cited:
- EP-A- 0 666 031
- EP-A- 1 053 690
- DE-A- 3 538 495
- US-A- 4 053 650

## Description

The invention relates to a fried or roasted snack food and to a method for preparing said snack food.

Many types of snack foods are known which are prepared by coating a core, typically a nut or raisin. The coating may be applied by spraying or dipping. Well-known examples of sweet coatings are based on chocolate. There are also coatings which are based on a dough and require frying or roasting. These are generally savoury snacks.

In the past, it has been a problem to prepare coated snack foods by frying or roasting wherein the core of the snack food is derived from something other than a nut or part of a nut. Many attempts have been made using a core derived from fruit or vegetables, such as a raisin. However, these attempts have thus far failed to produce an acceptable product.

From US-4053650 a baked confection is known, in which dried fruit, such as pineapple, apple etc. is coated with a starch coating and roasted.

In accordance with the invention it has been found that a fried or roasted snack food comprising a coated core of good quality can be prepared of cores other than nuts by using a core having a specific water activity before frying or roasting. Accordingly, the invention relates to a fried or roasted snack food comprising a core and a coating, wherein the core comprises a fruit or vegetable base and an edible plasticizer and has a water activity (Aw) before frying or roasting in the range of 0.20-0.55; and the coating comprises starch and one or more flavouring materials.

A snack food according to the invention has a very good texture and mouthfeel. The coating is sufficiently brittle to resemble that of coatings on fried or roasted snack foods comprising a nut core, whereas the core has a pleasant soft texture.

The core of a snack food according to the invention is preferably derived from fruit or vegetables, or comprises fruit or vegetable flavouring materials (natural or artificial). Preferred flavours include apple, apricot, banana, black currant, cherry, beet, blueberry, broccoli, cauliflower, carrot, cranberry, date, fig, garlic, grape, grapefruit, kiwifruit, lemon, lime, mango, melon, onion, orange, papaya, paprika, passionfruit, pear, pepper, pineapple, plum, raisin, raspberry, red berry, rhubarb, strawberry, tomato, tropical fruit, wild berry, and the like.

The core may have the shape of a dice or flake or any other suitable form. Preferred is a dice of essentially cubic or spherical shape as this facilitates the coating of the core. The size of the core is not critical, but preferably chosen in the range of from 0.01-1.0 cm³, more preferably 0.05-0.2 cm³.

An important property of the core is its water activity. In accordance with the invention, the term water activity is defined as the Equillibrium Relative Humidity (ERH) divided by 100, as measured using a commercially available Aw meter at 20°C. The Aw for pure water is 1.00. Before frying or roasting, the water activity (Aw) of the core must be in the range of from 0.20-0.55. In a preferred embodiment, the water activity (Aw) of the core before frying or roasting is in the range of 0.3-0.5. It has been found that by selecting a suitable water activity, the chances of bursting of the core through the coating during frying or roasting are significantly reduced. Also, by selecting a suitable water activity it can be ensured that a snack food is obtained of a good texture, wherein the core is not too hard to be easily chewed by consumers.

In order to obtain a snack food of pleasant texture and mouthfeel, it is further important that the core comprises a plasticizer. Of course, the plasticizer must be edible and non-toxic, and not impart an unpleasant taste on the snack food. Suitable plasticizers are glycerol, sorbitol, mannitol and the like. In a preferred embodiment, the plasticizer is glycerol.

Generally, the core will comprise between 1 and 50 wt.%, preferably between 5 and 30 wt.%, and more preferably between 7 and 25 wt.%, based on the weight of the core, of the plasticizer.

Other components of the core of a snack food according to the invention may be chosen from the group of colouring materials (e.g. paprika oleoresin or turmeric), food acids (e.g. citric acid), sweeteners, dietary fibres, texturisers (e.g. pectin), and combinations thereof.

Suitable examples of cores for a snack product according to the invention are commercially available from Taura Natural Ingredients NV, Olen, Belgium under the name Taura URC Products.

The composition used for coating the core and its properties are adapted to the specific core to be coated in order to ensure a good attachment. Further, the composition may be varied in order to achieve a specific degree of expansion. In practice, it is preferred that the coating is applied to the core by sprinkling flour and simultaneously spraying of a spraying liquid.

For achieving expansion of the coating during roasting or frying, the coating composition will typically comprise flour, most notably starch, which may be native starch or modified starch. Preferred types of starch are gelatinised waxy maize and gelatinised sticky rice starch. The choice for the amount of these expandable starches will depend on the desired surface texture, desired size and overall texture of the snack food. Coatings which do not expand can be based on non-expanding products, such as wheat flour, rice flour and the like.

It is also possible in accordance with the invention to combine two or more coatings. In a preferred embodiment, the core is coated with an expandable dough and then with a non-expandable dough. As a result the outer coating will break at various spots on the snack to show the expanded coating underneath, which gives the snack food an attractive appearance, particularly when the coatings are of different colour. For further details of how to prepare these craquelé-type snack foods, reference is made to Dutch patent application 9300160.

The coating may further comprise flavouring materials, such as salt (sodium chloride), herbs, spices, fruit or vegetable extracts, sweeteners, such as sugar, and the like, and/or other additives such as colouring materials, food acids, preservatives and the like. It is preferred that the coating comprises at least salt and sugar.

Generally water will be used for coating the cores, preferably in the spraying liquid. The amount of water used is preferably adjusted to provide a spraying liquid having a solids content of 20-60 wt.%, preferably 30-40 wt.%, based on the weight of the liquid. The flour preferably has a solids content of more than 80 wt.%, more preferably 85-95 wt.%, based on the weight of the flour. Preferably, the weight ratio of flour to spraying liquid lies between 70:30 and 30:70, more preferably between 60:40 and 40:60.

The coating may be applied to the core using conventional equipment such as a coating drum. The coating is preferably applied by simultaneously sprinkling flour and a spraying liquid to the rotating core drum with the core to be coated. The thickness of the coating will typically depend on the adherence of the dough to the core. Generally, the coating will be between 1 mm and 3 mm thick, preferably between 1.4 and 2.5 mm thick.

After coating the core with the dough, the coated core will be roasted or fried.

Frying may be carried out in any suitable oil. Preferably, a vegetable oil, such as sunflower oil, peanut oil, rape seed oil or the like is used. Preferably, frying is carried out at a temperature between 150 and 180°C, more preferably between 155 and 170°C. Preferably, frying will take place in 3 to 15 minutes, more preferably 5 to 10 minutes, depending on the size of the snack food.

Roasting, more in particular dry-roasting, may be carried out in the air or in an oven. Preferably, roasting is carried out at a temperature between 150 and 180°C, more preferably between 155 and 170°C. The duration of the roasting is preferably from 8 to 20 minutes, more preferably from 10 to 15 minutes, depending on the size of the snack food.

After frying or roasting, the snack food may be treated with oil, seasonings, aromas, herbs, spices or the like.

The invention will now be further illustrated by the following, non-restrictive examples. Unless otherwise indicated, indicated percentages are percentages by weight.

### Example 1

Core
- Taura URC fruit pieces apple, 4x5x5 mm, Aw = 0.4

Sprinkling flour
- 33% pre-gelatinised waxy starch
- 33% waxy starch
- 33% flour

Spraying liquid
5% salt
35% sugar
1% colourant
2% flavouring
57% water

3 kg core material was coated with 6 kg sprinkling flour and 5 kg spraying liquid in a rotating coating drum. The resulting semi-manufacture was deep fried in frying oil at 160 °C for 8 minutes. The fried product could be sprinkled with a seasoning, if desired. The resulting final product had an attractive relatively hard coating and a soft fruity-like core.

### Example 2

Using the same sprinkling flour and spraying liquid as in Example 1, snacks were prepared using the same procedure as described in Example 1. As a core Taura URC fruit strawberry, 4x5x5 mm, Aw =0.37 was used.

The resulting semi-manufacture was roasted at 160 °C for 12 minutes in a convective air oven. The fried product could be sprinkled with a seasoning, if desired. The resulting final product had an attractive relatively hard coating and a soft fruity-like core. Since no oil or fat is added the resulting coating texture was somewhat more brittle compared to Example 1. In this way a nearly fat-free snack could be obtained.

### Example 3

Using the same sprinkling flour and spraying liquid as in Example 1, snacks were prepared using the same procedure as described in Example 1. As a core Taura URC fruit tomato, 4x5x5 mm, Aw =0.52 was used. In this way (due to the higer initial Aw) a product was obtained with a more firm somewhat chewy core.

## Claims

1. Fried or roasted snack food comprising a core and a coating, wherein the core comprises a fruit or vegetable base and an edible plasticizer and has a water activity (Aw) before frying or roasting in the range of 0.20-0.55; and the coating comprises starch and one or more flavouring materials.

2. Snack food according to claim 1, wherein the plasticizer is chosen from the group of glycerol, sorbitol, mannitol, and combinations thereof.

3. Snack food according to claim 2, wherein the plasticizer is glycerol.

4. Snack food according to any of the preceding claims, wherein the water activity (Aw) of the core before frying or roasting is in the range of 0.3-0.5.

5. Snack food according to any of the preceding claims, wherein the core further comprises one or more of the components chosen from the group of colouring materials, food acids, sweeteners, dietary fibres, texturisers, and combinations thereof

6. Snack food according to any of the preceding claims, wherein the fruit or vegetable base comprises a fruit or vegetable juice, or fruit or vegetable flavouring materials.

7. Snack food according to any of the preceding claims, wherein the core has a volume in the range of from 0.01-1.0 cm³, preferably 0.05-0.2 cm³.

8. Method for preparing a snack food according to any of the preceding claims wherein a core comprising a fruit or vegetable base and an edible plasticizer and having a water activity (Aw) in the range of 0.20-0.55 is provided with a coating comprising starch and one or more flavouring materials, and wherein the coated core is fried or roasted.

9. Method according to claim 8, wherein the core is coated by sprinkling flour and spraying a spraying liquid onto the core.

10. Method according to claim 9, wherein the spraying liquid has a solids content of 20-60 wt.%, preferably 30-40 wt.%, based on the weight of the liquid.

11. Method according to claim 9 or 10, wherein the weight ratio of flour to spraying liquid lies between 70:30 and 30:70, preferably between 60:40 and 40:60.

12. Method according to any of the claims 8-11, wherein the coated core is fried at a temperature in the range of 150-180°C for 3-15 minutes.

13. Method according to any of the claims 8-11, wherein the coated core is dry-roasted at a temperature in the range of 150-180°C for 8-20 minutes.

14. Snack food according to any of the claims 1-7 obtainable by a method according to any of the claims 8-13.

## Patentansprüche

1. Gebratenes oder geröstetes Snack-Food mit einem Kern und einer Umhüllung, bei dem der Kern eine Frucht- oder Gemüsebasis und einen essbaren Weichmacher aufweist und eine Wasseraktivität (Aw) vor dem Braten oder Rösten im Bereich von 0,20-0,55 aufweist; und die Umhüllung Stärke und einen oder mehrere Aromastoffe aufweist.

2. Snack-Food nach Anspruch 1, bei dem der Weichmacher aus der Gruppe von Glycerol, Sorbitol, Mannitol und Kombinationen daraus gewählt ist.

3. Snack Food nach Anspruch 2, bei dem der Weichmacher Glycerol ist.

4. Snack-Food nach einem der vorhergehenden Ansprüche, bei dem die Wasseraktivität (Aw) des Kems vor dem Braten oder Rösten im Bereich von 0,3-0,5 liegt.

5. Snack-Food nach einem der vorhergehenden Ansprüche, bei dem der Kern ferner eine oder mehrere Komponenten aufweist, die aus der Gruppe von Farbstoffen, Lebensmittelsäuren, Süßstoffen, Ballaststoffen, Texturizern und Kombinationen daraus ausgewählt ist/sind.

6. Snack-Food nach einem der vorhergehenden Ansprüche, bei dem die Frucht- oder Gemüsebasis einen Frucht- oder Gemüsesaft oder Frucht- oder Gemüse-Aromastoffe aufweist.

7. Snack-Food nach einem der vorhergehenden Ansprüche, bei dem der Kern ein Volumen im Bereich von 0,01-1,0 cm³, vorzugsweise 0,05-0,2 cm³ aufweist.

8. Verfahren zum Herstellen eines Snack-Food nach einem der vorhergehenden Ansprüche, bei dem ein Kern mit einer Frucht- oder Gemüsebasis und einem essbaren Weichmacher und mit einer Wasseraktivität (Aw) im Bereich von 0,20-0,55 mit einer Umhüllung aus Stärke und einem oder mehreren Aromastoffen versehen wird und bei dem der umhüllte Kern gebraten oder geröstet wird.

9. Verfahren nach Anspruch 8, bei dem der Kern durch Bestreuen mit Mehl und Aufsprühen einer Sprühflüssigkeit auf den Kern umhüllt wird.

10. Verfahren nach Anspruch 9, bei dem die Sprühflüssigkeit einen Feststoffanteil von 20-60 Gewichtsprozent, vorzugsweise 30-40 Gewichtsprozent, basierend auf dem Gewicht der Flüssigkeit aufweist.

11. Verfahren nach Anspruch 9 oder 10, bei dem das Gewichtsverhältnis des Mehls zu der Sprühflüssigkeit zwischen 70:30 und 30:70, vorzugsweise zwischen 60:40 und 40:60 liegt.

12. Verfahren nach einem der Ansprüche 8-11, bei dem der umhüllte Kern bei einer Temperatur im Bereich von 150-180 °C 3-15 Minuten lang gebraten wird.

13. Verfahren nach einem der Ansprüche 8-11, bei dem der umhüllte Kern bei einer Temperatur im Bereich von 150-180 °C 8-20 Minuten lang gedörrt wird.

14. Snack-Food nach einem der Ansprüche 1-7, das mittels eines Verfahrens nach einem der Ansprüche 8-13 erhalten wird.

## Revendications

1. Nourriture de restauration rapide frite ou rôtie comprenant un coeur et un revêtement, dans laquelle le coeur comprend une base en fruit ou en légume et un plastifiant comestible et a une activité eau (Aw), avant de faire frire ou rôtir, dans la plage allant de 0,20 à 0,55, et le revêtement comprend de l'amidon et une ou plusieurs matières de saveur.

2. Nourriture de restauration rapide selon la revendication 1, dans laquelle le plastifiant est choisi parmi le groupe constitué par le glycérol, le sorbitol, le mannitol, et leurs combinaisons.

3. Nourriture de restauration rapide selon la revendication 2, dans laquelle le plastifiant est du glycérol.

4. Nourriture de restauration rapide selon l'une quelconque des revendications précédentes, dans laquelle l'activité eau (Aw) du coeur avant de faire frire ou rôtir, est dans la plage allant de 0,3 à 0,5.

5. Nourriture de restauration rapide selon l'une quelconque des revendications précédentes, dans laquelle le coeur comprend en outre un ou plusieurs constituants choisi parmi le groupe constitué par des matières colorantes, des acides pour nourriture, des adoucissants, des fibres de régime, des agents de texture, et leurs combinaisons.

6. Nourriture de restauration rapide selon l'une quelconque des revendications précédentes, dans laquelle la base de fruit ou légume comprend un jus de fruit ou de légume, ou des matières de saveur de fruit ou légume.

7. Nourriture de restauration rapide selon l'une quelconque des revendications précédentes, dans laquelle le coeur a un volume dans la plage allant de 0,01 à 1,0 cm³, de préférence de 0,05 à 0,2 cm³.

8. Procédé de préparation d'une nourriture de restauration rapide selon l'une quelconque des revendications précédentes, dans lequel un coeur comprenant une base en fruit ou légume et un plastifiant comestible et ayant une activité eau (Aw) dans la plage allant de 0,20 à 0,55 est munie d'un revêtement comprenant de l'amidon et une ou plusieurs matières de saveur, et où le coeur revêtu est frit ou rôti.

9. Procédé selon la revendication 8, dans lequel le coeur est revêtu par saupoudrage de farine et projection de gouttelettes d'un liquide d'aspersion sur le coeur.

10. Procédé selon la revendication 9, dans lequel le liquide d'aspersion a une teneur en solides allant de 20 à 60 % en poids, de préférence de 30 à 40% en poids, rapporté au poids du liquide.

11. Procédé selon la revendication 9 ou 10, dans lequel le rapport pondéral de la farine par rapport au liquide d'aspersion est situé entre 70:30 et 30:70, de préférence entre 60:40 et 40:60.

12. Procédé selon l'une quelconque des revendications 8 à 11, dans lequel le coeur revêtu est frit à une température dans la plage allant de 150 à 180°C pendant 3 à 15 minutes.

13. Procédé selon l'une quelconque des revendications 8 à 11, dans lequel le coeur revêtu est rôti à sec à une température dans la plage allant de 150 à 180°C pendant 8 à 20 minutes.

14. Nourriture de restauration rapide selon l'une quelconque des revendications 1 à 7 pouvant être obtenue par un procédé selon l'une quelconque des revendications 8 à 13.
